# EUROPEAN PATENT SPECIFICATION

(11) **EP 3 223 614 B1**
(45) Date of publication and mention of the grant of the patent: **19.07.2023**
(21) Application number: 15859360.8
(22) Date of filing: 27.08.2015
(51) Int. Cl.: A01N 43/82, A01N 43/90, A01P 13/02

(54) **HERBICIDAL COMPOSITION AND METHOD FOR CONTROLLING PLANT GROWTH**
HERBIZIDE ZUSAMMENSETZUNG UND VERFAHREN ZUR STEUERUNG DES PFLANZENWACHSTUMS
COMPOSITION HERBICIDE ET PROCÉDÉ POUR RÉGULER LA CROISSANCE DE VÉGÉTAUX

(30) Priority: 11.11.2014 GB 201420042
(43) Date of publication of application: 04.10.2017
(73) Proprietor: JIANGSU ROTAM CHEMISTRY CO., LTD., Economic & Technical Development Zone, Kunshan, Jiangsu 215301 (CN)
(72) Inventor: BRISTOW, James Timothy, Hong Kong (CN)
(74) Representative: Akers, Noel James
(86) International application number: PCT/CN2015/088232
(87) International publication number: WO 2016/074519

(56) References cited:
- WO-A1-02/21922
- WO-A1-02/058472
- WO-A1-02/100171
- WO-A1-02/100171
- CN-A- 101 926 341
- CN-A- 102 283 219
- CN-A- 105 454 266
- CN-A- 105 557 732
- DE-A1- 10 041 619
- DE-A1- 10 103 417
- DE-A1- 19 834 627
- Tm ET AL: "28. Deutsche Arbeitsbesprechung über Fragen der Unkrautbiologie und -bekämpfung Flufenacet an interesting mix partner for Viper", , 1 January 2018 (2018-01-01), XP55468411, DOI: 10.5073/jka.2018.458.052 Retrieved from the Internet: URL:https://ojs.openagrar.de/index.php/JKA /article/view/8951 [retrieved on 2018-04-18]
- "2010 Research Progress Report", , 8 March 2010 (2010-03-08), pages 1-145, XP055009026, Waikoloa, Hawai, U.S.A. Retrieved from the Internet: URL:http://www.wsweedscience.org/Research Report Archive/2010 WSWS RPR.pdf [retrieved on 2011-10-10]
- Aaron Hager^marshall Mcglamery: "New Corn Herbicides for 1999", , 22 March 1999 (1999-03-22), XP55707933, Retrieved from the Internet: URL:http://bulletin.ipm.illinois.edu/pastp est/articles/199901g.html [retrieved on 2020-06-23]
- Anonymous: "AgriMarketing.com - New GoldSky Herbicide From Dow AgroSciences Receives Federal Label Registration", , 28 August 2008 (2008-08-28), XP055707913, Retrieved from the Internet: URL:https://www.agrimarketing.com/show_sto ry.php?id=50816 [retrieved on 2020-06-23]
- Axiom Df ET AL: "24(c) Supplemental Label FOR DISTRIBUTION AND USE ONLY WEST OF THE CASCADE MOUNTAIN RANGE IN THE STATE OF OREGON Axiom DF Herbicide ACTIVE INGREDIENTS", , 24 October 2008 (2008-10-24), XP55707931, Retrieved from the Internet: URL:https://picol.cahnrs.wsu.edu/Download/ LabelByLegacyPath?legacyPath=/~picol/pdf/O R/51838.pdf [retrieved on 2020-06-23]
- Agrosciences Dow ET AL: "(TM) Trademark of Dow AgroSciences LLC SAFETY DATA SHEET", , 8 August 2016 (2016-08-08), XP55707960, Retrieved from the Internet: URL:https://s3-us-west-1.amazonaws.com/agr ian-cg-fs1-production/pdfs/GoldSky_MSDS1e. pdf [retrieved on 2020-06-23]
- Axiom Df ET AL: "24(c) Supplemental Label FOR DISTRIBUTION AND USE ONLY WEST OF THE CASCADE MOUNTAIN RANGE IN THE STATE OF OREGON Axiom DF Herbicide ACTIVE INGREDIENTS", , 24 October 2008 (2008-10-24), XP055707931, Retrieved from the Internet: URL:https://picol.cahnrs.wsu.edu/Download/ LabelByLegacyPath?legacyPath=/~picol/pdf/O R/51838.pdf [retrieved on 2020-06-23]

## Description

The present invention relates to a herbicidal composition. The invention also relates to a method of controlling the growth of undesirable vegetation, particularly in crops, including using the aforementioned composition.

The protection of crops from undesirable vegetation, which inhibits crop growth, is a constantly recurring problem in agriculture. To solve this problem, researchers are trying to produce an extensive variety of chemicals and chemical formulations effective in the control of such undesirable growth. Chemical herbicides of many types have been disclosed in the literature and a large number are in commercial use.

Some herbicidal active ingredients have been shown to be more effective when applied in combination rather than applied individually, this effect being referred to as "synergism." According to Herbicide Handbook of the Weed Science Society of America, Seventh Edition, 1994, page 318, "synergism" is an interaction of two or more factors such that the effect when combined is greater than the predicted effect based on the response to each factor applied separately.

US 6,967,188 discloses the combination of a general class of heteroaryloxy-acetamides with a wide range of herbicide components. It is alleged that the wide range of mixtures postulated exhibit synergy. US2004102321 discloses synergistic mixtures of a compound of very generic formula (I). The document indicates several favourite compositions comprising favourite compounds of formula (I). The combination of flufenacet+flurasulam is disclosed within several binary compositions. General ratio of application are given for all the binary mixtures, no examples show any synergism.

Flufenacet and florasulam are two compounds known to be herbicidally active and to be of use in the control of unwanted plant growth. It has now surprisingly been found that flufenacet and florasulam display a synergistic effect in the control of plant growth when applied in combination, for example in a composition comprising both compounds or when applied together to a locus to be treated.

The herbicidal active ingredients forming the herbicidal composition and used in the method of this invention are independently known in the art for their effects on plant growth. They are all disclosed in The Pesticides Manual, Twelfth Edition, 2000, published by The British Crop Protection Council. They are also commercially available.

The synergistic effects of flufenacet and flurasulam forming the basis of the present invention can provide one or more of a number of advantages over the use of each component (A) flufenacet and (B) florasulam. The rates of application of each component can be markedly reduced, when used in combination, while maintaining a high level of herbicidal efficacy. The treatment using both flufenacet and florasulam can exhibit a considerably broader weed spectrum than does either of the components when used alone. The use of the combination of flufenacet and florasulam can have the potential to control weed species at a low application rate, in particular a rate of application at which the individual components alone are ineffective. The use of a composition comprising the two aforementioned active components can have a speed of action which is faster than that which would have been predicted from the speed of each component used individually.

In a first aspect, the present invention provides a composition comprising a herbicidally effective amount of (A) flufenacet and (B) florasulam, according to claim 1.

The composition contains a herbicidally effective amount of a combination of (A) flufenacet and (B) florasulam. "Herbicide" as used herein, refers to a compound that controls the growth of plants. "Herbicidally effective amount" as used herein, refers to the quantity of such a compound or combination of such compounds that is capable of producing a controlling effect on the growth of plants. The controlling effects include all deviation from the natural development of the target plants, for example killing, retardation of one or more aspects of the development and growth of the plant, leaf burn, albinism, dwarfing and the like. The term "plants" refers to all physical parts of a plant, including shoots, leaves, needles, stalks, stems, fruit bodies, fruits, seeds, roots, tubers and rhizomes.

Flufenacet (IUPAC name: 4'-fluoro-*N*-isopropyl-2-(5-trifluoromethyl-1,3,4-thiadiazol-2-yloxy)acetanilide) has the following chemical structure:

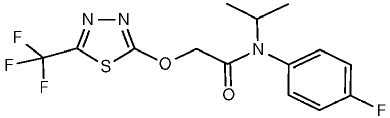

Flufenacet is a selective inhibitor of cell growth and cell division. It affects cell membranes of meristematic tissues in the target plant, interfering with both membrane selectivity and permeability. This, in turn, prevents cell division, thereby preventing unwanted growth. Flufenacet is particularly effective in the control of certain species of grass.

Florasulam (IUPAC name: 2',6',8-trifluoro-5-methoxy[1,2,4]triazolo[1,5-*c*]pyrimidine-2-sulfonanilide) has the following chemical structure:

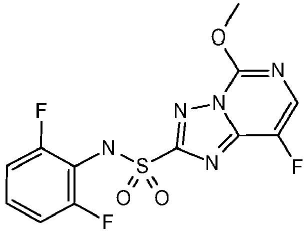

Florasulam is an inhibitor of the acetolactase synthase enzyme (ALS) in the target plant. It inhibits the synthesis of branched chain amino acids, such as leucine, isoleucine and valine in the target plants.

As noted above, the present invention relates to a synergistic herbicidal composition comprising a herbicidally effective amount of (A) flufenacet and (B) florasulam for controlling the growth of undesirable vegetation, according to claim 1.

The present invention also provides a method of controlling undesirable vegetation in plants comprising applying to the vegetation or to the locus thereof a herbicidally effective amount of the herbicidal composition of the first aspect of the present invention.

In a still further aspect, the present invention provides a method of controlling plant growth at a locus comprising applying to the locus herbicidally effective amounts of flufenacet and florasulam, as required by claim 4.

In a still further aspect, the present invention provides the use of a combination of flufenacet and florasulam in the control of plant growth at a locus, as required by claim 9.

The composition and methods of the present invention are useful in controlling undesirable vegetation in a range of crops, including cereals, cotton, potatoes, sunflower, peanuts and soybean. The control of undesirable vegetation in such crops may be achieved by applying to the locus florasulam and flufenacet in suitable amounts. The active compounds may be applied to the locus together or separately. If applied separately, flufenacet and florasulam may be applied at the same time and/or consecutively. The control may comprise applying to the vegetation or the locus thereof a herbicidally effective amount of the herbicidal composition.

The species spectrums of (A) flufenacet and (B) florasulam, that is, the weed species that the respective compounds control, are broad and highly complementary. Flufenacet is active in controlling grasses and some broad leaf weeds. Florasulam is effective in controlling most broadleaved weeds. It has been surprisingly found that a combination of flufenacet and florasulam exhibits a synergistic action in the control of many weeds. The weeds particularly susceptible to control by a combination of flufenacet and florasulam include foxtail (*Setaria spp*.), wild finger millet (*Eleusine spp*.), cough grass (*Digitaria spp*.), rye grass (*Lolium spp*.), shepherds purse (*Capsella bursapastories*), fat hen (*Chenopodium album*), double thorn (*Oxygonum sinuatum*), black bind weed (*polygonum convolvulus*), mexican marigold (*Tagetes minuta*), gallant soldier (*Galinsoga parviflora*), white charlock (*Raphanus raphanastrium*), blackgrass (*Alopecurus spp*.), meadow grass (*Poa spp*.), silky bent grass (*Apera spp*.), barnyardgrass (*Echinochloa spp*.), cleavers (*Galium aparine*), common chickweed (*Stellaria media*), hedge mustard (*Sisymbrium officinale*), parsley-piert, scanted mayweed (*Matricaria chamomilla*), scentless mayweed (*Matricaria perforate*), shephard's-needle, shepherd's-purse, volunteer oilseed rape (*Brassica napus*), wild radish (*Raphanus raphanistrum*), charlock (*Sinapis arvensis*), poppy (*Papaver rhoeas*), especially blackgrass, meadow grass, silky bent grass, cleavers, chickweed, mayweeds, poppy, charlock and volunteer oilseed rape.

In one embodiment, the compositions and/or method of the present invention are used in the control of the growth of one or more of the aforementioned plants, with the exception of *Digitaria sanguinalis* and *Eriochloa villosa.*

In one embodiment, the compositions and/or method of the present invention are used in the control of the growth of one or more of the aforementioned plants, with the exception of *Alopecurus myosuroides*, *Stellaria media*, *Polygonum convolvulus*, *Matricaria inodora*, *Centaurea cyanus*, *Poa annua*, and *Avena fatua.*

The compositions and/or method of this invention can be used more particularly for controlling the growth of blackgrass (*Alopecurus spp*.), meadow grass (*Poa spp*.), silky bent grass (*Apera spp.*), cleavers (*Galium aparine*), chickweed (*Stellaria media*), mayweeds (*Matricaria spp*.), poppy (*Papaver rhoeas*), charlock (*Sinapis arvensis*) and volunteer oilseed rape (*Brassica napus*).

In one embodiment, the compositions and/or method of the present invention are applied to the control of silky bent grass (*Apera spp.*), cleavers (*Galium aparine*), poppy (*Papaver rhoeas*), charlock (*Sinapis arvensis*) and volunteer oilseed rape (*Brassica napus*).

The synergistic effects of (A) flufenacet and (B) florasulam when combined or used together are exhibited in a wide range of weight ratios of the two components. In many embodiments, flufenacet is employed in weight excess to florasulam. In the compositions of this invention or in use, the weight ratio of (A) flufenacet to (B) florasulam is from about 120:1 to about 100:1.

The active synergistic components may be present in the composition of the present invention in a wide range of amounts. In preferred embodiments, the total amount of (A) flufenacet and (B) florasulam is from about 5% to 99% by weight of the synergistic composition. Preferably, the composition comprises from 10% to 75% by weight of flufenacet and from 0.1% to 5% by weight of florasulam, more preferably from 12% to 65% by weight of flufenacet and from 0.2% to 4% by weight of florasulam.

In general, the application rate of the active ingredients flufenacet and florasulam depends on such factors as the type of weed, type of crop plant, soil type, season, climate, soil ecology and various other factors. The application rate of the composition for a given set of conditions can readily be determined by routine trials.

The application rate of the active ingredients is from 80 to 500 g/ha of (A) flufenacet and from 1 to 20 g/ha of (B) florasulam. In some embodiment of this invention, the application rate of the active ingredients is from 120 to 360 g/ha of (A) flufenacet and 1 to 7.5 g/ha of (B) florasulam.

As noted above, in the present invention, flufenacet and florasulam may be applied either separately or combined as part of a two-part herbicidal system, such as the composition of the present invention.

The compositions of this invention can be formulated in conventional manner, for example by mixing flufenacet and florasulam with appropriate auxiliaries. Suitable auxiliaries will depend upon such factors as the type of formulation and will be known to the person skilled in the art.

In particular, the composition may further comprise one or more auxiliaries selected from extenders, carriers, solvents, surfactants, stabilizers, anti-foaming agents, anti-freezing agents, preservatives, antioxidants, colorants, thickeners, solid adherents, fillers, wetting agents, dispersing agents, lubricants, anticaking agents, deformers and diluents. Such auxiliaries are known in the art and are commercially available. Their use in the formulation of the compositions of the present invention will be apparent to the person skilled in the art.

Suitable formulations for applying a combination of flufenacet and florasulam include water-soluble concentrates (SL), emulsifiable concentrates (EC), emulsions (EW), micro-emulsions (ME), suspension concentrates (SC), oil-based suspension concentrates (OD), flowable suspensions (FS), water-dispersible granules (WG), water-soluble granules (SG), water-dispersible powders (WP), water soluble powders (SP), granules (GR), encapsulated granules (CG), fine granules (FG), macrogranules (GG), aqueous suspo-emulsions (SE), capsule suspensions (CS) and microgranules (MG). Preferred formulations are capsule suspensions (CS), emulsifiable concentrates (EC), granules (GR), suspension concentrates (SC), water-dispersible granules (WG) and water-dispersible powders (WP).

In one embodiment, the present invention employs a formulation of any one of the aforementioned types, with the exception of an emulsifiable concentrate (EC). In this embodiment, preferred formulation types are suspension concentrates (SC), water-dispersible granules (WG), water-dispersible powders (WP), and capsule suspensions (CS).

The composition may comprise one or more inert fillers. Such inert fillers are known in the art and available commercially. Suitable fillers include, for example, natural ground minerals, such as kaolins, aluminas, talc, chalk, quartz, attapulgite, montmorillonite, and diatomaceous earth, or synthetic ground minerals, such as highly dispersed silicic acid, aluminum oxide, silicates, and calcium phosphates and calcium hydrogen phosphates. Suitable inert fillers for granules include, for example, crushed and fractionated natural minerals, such as calcite, marble, pumice, sepiolite, and dolomite, or synthetic granules of inorganic and organic ground materials, as well as granules of organic material, such as sawdust, coconut husks, corn cobs, and tobacco stalks.

The composition may optionally include one or more surfactants which are preferably non-ionic, cationic and/or anionic in nature and surfactant mixtures which have good emulsifying, dispersing and wetting properties, depending upon the active compound/compounds being formulated. Suitable surfactants are known in the art and are commercially available.

Suitable anionic surfactants can be both so-called water-soluble soaps and water-soluble synthetic surface-active compounds. Soaps which may be used include the alkali metal, alkaline earth metal or substituted or unsubstituted ammonium salts of higher fatty acid (C₁₀ to C₂₂), for example the sodium or potassium salt of oleic or stearic acid, or of natural fatty acid mixtures.

The surfactant may comprise an emulsifier, dispersant or wetting agent of ionic or nonionic type. Examples of such agents include salts of polyacrylic acids, salts of lignosulphonic acid, salts of phenylsulphonic or naphthalenesulphonic acids, polycondensates of ethylene oxide with fatty alcohols or with fatty acids or with fatty amines, substituted phenols, especially alkylphenols, sulphosuccinic ester salts, taurine derivatives, especially alkyltaurates, and phosphoric esters of polyethoxylated phenols or alcohols.

The presence of at least one surfactant is generally required when the active compound and/or the inert carrier and/or auxiliary/adjuvant are insoluble in water and the vehicle for the final application of the composition is water.

The composition may optionally further comprise one or more polymeric stabilizers. Suitable polymeric stabilizers that may be used in the present invention include, but are not limited to, polypropylene, polyisobutylene, polyisoprene, copolymers of monoolefins and diolefins, polyacrylates, polystyrene, polyvinyl acetate, polyurethanes or polyamides. Suitable stabilizers are known in the art and commercially available.

The surfactants and polymeric stabilizers mentioned above are generally believed to impart stability to the composition, in turn allowing the composition to be formulated, stored, transported and applied.

Suitable anti-foaming agents for use in the compositions include all substances which can normally be used for this purpose in agrochemical compositions. Suitable anti-foaming agents are known in the art and are available commercially. Particularly preferred antifoam agents are mixtures of polydimethylsiloxanes and perfluroalkylphosphonic acids, such as the silicone anti-foaming agents available from GE or Compton.

Suitable solvents for use in the compositions may be selected from all customary organic solvents which thoroughly dissolve the active compounds employed. Again, suitable organic solvents for flufenacet and florasulam are known in the art. The following may be mentioned as being preferred: N-methyl pyrrolidone, N-octyl pyrrolidone, cyclohexyl-1-pyrrolidone; and a mixture of paraffinic, isoparaffinic, cycloparaffinic and aromatic hydrocarbons (available commercially as SOLVESSO^{™}200). Suitable solvents are commercially available.

Suitable preservatives include all substances which can normally be used for this purpose in agrochemical compositions of this type and again are well known in the art. Suitable examples that may be mentioned include PREVENTOL^{®} (from Bayer AG) and PROXEL^{®} (from Bayer AG).

The compositions may comprise an antioxidant. Suitable antioxidants are all substances which can normally be used for this purpose in agrochemical compositions, as is known in the art. Preference is given to butylated hydroxytoluene.

Suitable thickeners for use in the compositions include all substances which can normally be used for this purpose in agrochemical compositions. Examples include xanthan gum, PVOH, cellulose and its derivatives, clay hydrated silicates, magnesium aluminum silicates or a mixture thereof. Again, such thickeners are known in the art and available commercially.

The compositions may further comprise one or more solid adherents. Such adherents are known in the art and available commercially. They include organic adhesives, including tackifiers, such as celluloses of substituted celluloses, natural and synthetic polymers in the form of powders, granules, or lattices, and inorganic adhesives such as gypsum, silica, or cement.

In the method and use of the present invention, the combination of the active ingredients flufenacet and florasulam can be applied to the locus where control is desired, such as to the leaves of plants and/or the surrounding soil, by a convenient method. The "locus" refers to the place where the plants are growing, the place where the plant propagation materials of the plants are sown or the place where the plant propagation materials of the plants will be sown.

As noted above, the present invention also relates to the use of a combination of flufenacet and florasulam, for example in a composition or formulation as described above, for controlling or modifying the growth of undesirable vegetation in crops. The combination of flufenacet and florasulam is useful in treating a range of crops, including cereals, for example wheat, barley, rye, oats, maize, rice, sorghum, triticale and related crops; beet, for example sugar beet and fodder beet; fruit, such as pomes, stone fruit and soft fruit, for example apples, grapes, pears, plums, peaches, almonds, cherries, and berries, for example strawberries, raspberries and blackberries; leguminous plants, for example beans, lentils, peas, soybeans, peanuts; oil plants, for example rape, mustard, sunflowers; cucurbitaceae, for example marrows, cucumbers, melons; fibre plants, for example cotton, flax, hemp, jute; citrus fruit, for example oranges, lemons, grapefruit and mandarins; vegetables, for example spinach, lettuce, asparagus, cabbages, carrots, onions, tomatoes, potatoes, paprika; as well as ornamentals, such as flowers, shrubs, broad-leaved trees and evergreens, for example conifers.

In a preferred embodiment, the composition and/or method of the present invention is used for controlling growth of undesirable vegetation in cereals, cotton, potatoes, sunflower, peanuts and soybean.

Suitable crops for treatment using the composition and method of the present invention include those which are tolerant to flufenacet and florasulam. The tolerance can be a natural tolerance produced by selective breeding or can be artificially introduced by genetic modification of the crop. In this respect, tolerance means a low susceptibility to damage caused by a particular herbicide.

The compositions employed in the practice of the present invention can be applied in a variety of ways known to those skilled in the art, at various concentrations. The method and compositions of the present invention are useful in controlling the growth of undesirable vegetation by pre-planting, pre-emergence or post-emergence application to the locus where control is desired. The active ingredients flufenacet and florasulam may be applied to the leaves of the undesired plant by conventional methods including coating, spraying, sprinkling, dipping, soaking, injection, irrigation, and the like.

The method of the present invention may employ other pesticides, in addition to the combination of flufenacet and florasulam. For example, compositions of the present invention may contain or be mixed with other pesticides, such as fungicides, insecticides and nematicides, growth factor enhancers and fertilizers, to enhance the activity of the present invention or to widen its spectrum of activity. Similarly, the method of the present invention may be employed in conjunction with the use of one or more of the aforementioned active ingredients, again to obtain an enhanced efficacy or broader spectrum of activity.

Although the present invention has been described with reference to preferred embodiments and examples thereof, the scope of the present invention is not limited only to those described embodiments. As will be apparent to persons skilled in the art, modifications and adaptations to the above-described invention can be made without departing from the spirit and scope of the invention, which is defined by the appended claims.

Embodiments of the present invention will now be described, for illustrative purposes only, by way of the following examples.

### Formation Examples

### Example 1 60% Flufenacet WG

A water dispersible granule formulation was prepared having the composition summarized in Table 1 below.

**Table 1**

| | |
|---|---|
| Flufenacet | 600g |
| Supralate^{®} (sodium lauryl sulfate, Witco Inc., Greenwich) | 5g |
| Reax^{®}88B (sodium lignosulfonate, Westvaco Corp) | 50g |
| Potassium sulphate | 345g |

### Example 2 5% Florasulam SC

A suspension concentrate formulation was prepared having the composition summarized in Table 2 below.

**Table 2**

| | |
|---|---|
| Florasulam | 50g |
| Propylene glycol | 100g |
| Tristyrylphenol ethoxylates | 10g |
| Sodium lignosulfonate | 20g |
| Carboxymethylcellulose | 20g |
| Silicone oil (in the form of a 75% emulsion in water) | 10g |
| Water | Balance to 1L |

### Example 3 64% Flufenacet or + 0.8% Florasulam WG (not part of the invention)

A water dispersible granule composition according to the present invention was prepared having the composition summarized in Table 3 below.

**Table 3**

| | |
|---|---|
| Flufenacet | 640g |
| Florasulam | 8g |
| Supralate^{®} (sodium lauryl sulfate, Witco Inc., Greenwich) | 5g |
| Reax^{®}88B (sodium lignosulfonate, Westvaco Corp) | 50g |
| Potassium carbonate | 297g |

### Example 4 10% Flufenacet + 0.3% Florasulam SC (not part of the invention)

A suspension concentrate composition according to the present invention was prepared having the composition summarized in Table 4 below.

**Table 4**

| | |
|---|---|
| Flufenacet | 100g |
| Florasulam | 3g |
| Propylene glycol | 100g |
| Tristyrylphenol ethoxylates | 10g |
| Sodium lignosulfonate | 20g |
| Carboxymethylcellulose | 20g |
| Silicone oil (in the form of a 75% emulsion in water) | 10g |
| Water | Balance to 1L |

### Example 5 20% Flufenacet + 0.2 Florasulam EC

An emulsion concentrate composition according to the present invention was prepared having the composition summarized in Table 5 below.

**Table 5**

| | |
|---|---|
| Flufenacet | 200g |
| Florasulam | 2g |
| Tristyrylphenol ethoxylates | 50g |
| Sodium lignosulfonate | 10g |
| Silicone oil | 10g |
| N-methylpyrrolidone | Balance to 1L |

### Example 6 60% Flufenacet + 3% Florasulam WP (not part of the invention)

A water dispersible powder composition according to the present invention was prepared having the composition summarized in Table 6 below.

**Table 6**

| | |
|---|---|
| Flufenacet | 600g |
| Florasulam | 30g |
| Dispersogen1494 (sodium salt of a cresol-formaldehyde condensation) | 50 g |
| Kaolin | 320g |

### Example 7 50% Flufenacet + 2% Florasulam WG (not part of the invention)

A water dispersible granule composition according to the present invention was prepared having the composition summarized in Table 7 below.

**Table 7**

| | |
|---|---|
| Flufenacet | 500g |
| Florasulam | 20g |
| Supralate^{®} (sodium lauryl sulfate, Witco Inc., Greenwich) | 5g |
| Reax^{®}88B (sodium lignosulfonate, Westvaco Corp) | 50g |
| Potassium sulphate | 425g |

### Example 8 12% Flufenacet + 0.3% Florasulam SC

A suspension concentrate composition according to the present invention was prepared having the composition summarized in Table 8 below.

**Table 8**

| | |
|---|---|
| Flufenacet | 360g |
| Florasulam | 3g |
| Propylene glycol | 100g |
| Tristyrylphenol ethoxylates | 10g |
| Sodium lignosulfonate | 20g |
| Carboxymethylcellulose | 20g |
| Silicone oil (in the form of a 75% emulsion in water) | 10g |
| Water | Balance to 1L |

### Example 9 12% Flufenacet + 0.3% Florasulam CS (not part of the invention)

A capsule suspension composition according to the present invention was prepared having the composition summarized in Table 9 below.

**Table 9**

| | |
|---|---|
| Flufenacet | 120g |
| Florasulam | 3g |
| SOLVESSO^{™}100 | 150g |
| PVA | 8g |
| Sodium lignosulfonate | 6g |
| SUPRASEC^{®}5005 | 30g |
| Diethylenetriamine | 14g |
| Propylene glycol | 40g |
| Xanthan | 1g |
| NIPACIDE BIT 20 | 1g |
| Silicone oil (in the form of a 75% emulsion in water) | 2g |
| Water | 625g |

### Biological Examples 1

Barley, wheat, sunflower and maize plants were sown side by side in the field. Different types of weeds and their relative density were recorded and are listed in Table 10 below. Formulations of Examples 1 to 9 above were applied 50 days after planting. After spraying the plants, the beds were maintained for about 2 weeks. Two weeks after application, the beds were examined to determine the efficiency of the treatment. The results are set forth below in Table 11 below.

**Table 10. Type of weed**

| **Type of weed** | **Relative density (%)** |
|---|---|
| Blackgrass | 15 |
| Meadow grass | 10 |
| Silky bent grass | 10 |
| Cleaver | 15 |
| Chickweed | 10 |
| Mayweed | 5 |
| Poppy | 5 |
| Charlock | 10 |
| Volunteer oilseed rape | 20 |

As can be seen from the results set out in Table 11 below, the formulations of the present invention, comprising a combination of flufenacet and florasulam, exhibited a significantly increased effect in the control of the target weeds, compared with either flufenacet and florasulam alone or that predicted from a combination of the two active ingredients. This increased effect is a clear indication of synergy between the two active ingredients.

**Table 11. Efficiency (%)**

| | **Efficiency** | | | | | | | | | | |
|---|---|---|---|---|---|---|---|---|---|---|---|
| **Formulation Examples** | **Type of weed** | | | | | | | | | | |
| | Flufenacet (g/ha) | Florasulam (g/ha) | Blackgrass | Meadow grass | Silky bent grass | Cleaver | Chickweed | Mayweed | Poppy | Charlock | Volunteer oilseed rape |
| Untreated | 0 | 0 | 0% | 0% | 0% | 0% | 0% | 0% | 0% | 0% | 0% |
| Example 1 | 500 | 0 | 20% | 30% | 20% | 10% | 20% | 30% | 25% | 25% | 25% |
| Example 2 | 0 | 7.5 | 15% | 20% | 20% | 10% | 20% | 25% | 25% | 20% | 25% |
| Example 3 | 80 | 1 | 90% | 100% | 85% | 90% | 90% | 90% | 100% | 85% | 85% |
| Example 4 | 100 | 3 | 95% | 100% | 90% | 85% | 95% | 95% | 90% | 90% | 90% |
| Example 5 | 200 | 2 | 95% | 100% | 100% | 90% | 90% | 100% | 95% | 95% | 100% |
| Example 6 | 150 | 7.5 | 95% | 90% | 100% | 90% | 95% | 100% | 90% | 100% | 95% |
| Example 7 | 500 | 20 | 95% | 90% | 95% | 90% | 95% | 95% | 100% | 95% | 95% |
| Example 8 | 360 | 3 | 90% | 90% | 100% | 95% | 85% | 100% | 95% | 100% | 100% |
| Example 9 | 120 | 3 | 95% | 95% | 95% | 90% | 90% | 95% | 100% | 90% | 95% |

## Claims

1. A composition comprising a herbicidally effective amount of (A) flufenacet and (B) florasulam, **characterized in that** the weight ratio of flufenacet to florasulam is in the range of from 120:1 to 100:1.

2. The composition according to claim 1, wherein the total amount of flufenacet and florasulam is from 5% to 99% by weight of the composition; preferably wherein the composition comprises, by weight, from 10% to 75% of flufenacet and from 0.1% to 5% of florasulam; more preferably wherein the composition comprises, by weight, from 12% to 65% of flufenacet and from 0.2% to 4% of florasulam.

3. The composition according to any preceding claim, being formulated as a water-soluble concentrate (SL), an emulstifiable concentrate (EC), an emulsion (EW), a microemulsion (ME), a suspension concentrate (SC), an oil-based suspension concentrate (OD), a flowable suspension (FS), a water-dispersible granule (WG), a water-soluble granule (SG), a water-dispersible powder (WP), a water soluble powder (SP), a granule (GR), an encapsulated granule (CG), a fine granule (FG), a macrogranule (GG), an aqueous suspo-emulsion (SE), a capsule suspension (CS) or a microgranule (MG).

4. A method of controlling plant growth at a locus comprising applying to the locus herbicidally effective amounts of flufenacet and florasulam, **characterized in that** the weight ratio of flufenacet to florasulam is in the range of from 120:1 to 100:1 and flufenacet and florasulam are applied at an application rate of from 80 to 500 g/ha of flufenacet and from 1 to 20 g/ha of florasulam.

5. The method according to claim 4, wherein the plant growth is being controlled in a crop comprising cereals, cotton, potatoes, sunflower, peanuts and/or soybean.

6. The method according to either of claims 4 or 5, wherein flufenacet and florasulam are applied to the locus at the same time and/or wherein flufenacet and florasulam are applied to the locus consecutively.

7. The method according to any of claims 4 to 6, wherein the plant growth being controlled is of one or more of foxtail (*Setaria spp*.), wild finger millet (*Eleusine spp*.), cough grass (*Digitaria spp.*), rye grass (*Lolium spp*.), shepherds purse (*Capsella bursapastories*), fat hen (*Chenopodium album*), double thorn (*Oxygonum sinuatum*), black bind weed (*polygonum convolvulus*), mexican marigold (*Tagetes minuta*), gallant soldier (*Galinsoga parviflora*), white charlock (*Raphanus raphanastrium*), blackgrass (*Alopecurus spp*.), meadow grass (*Poa spp.*), silky bent grass (*Apera spp.*), barnyardgrass (*Echinochloa spp.*), cleavers (*Galium aparine*), common chickweed (*Stellaria media*), hedge mustard (*Sisymbrium officinale*), parsley-piert, scanted mayweed (*Matricaria chamomilla*), scentless mayweed (*Matricaria perforate*), shephard's-needle, shepherd's-purse, volunteer oilseed rape (*Brassica napus*), wild radish (*Raphanus raphanistrum*), charlock (*Sinapis arvensis*), poppy (*Papaver rhoeas*), especially blackgrass, meadow grass, silky bent grass, cleavers, chickweed, mayweeds, poppy, charlock and volunteer oilseed rape; preferably wherein the plant growth being controlled is one or more of Blackgrass, Meadow grass, Silky bent grass, Cleaver, Chickweed, Mayweed, Poppy, Charlock and Volunteer oilseed rape.

8. The method according to any of claims 4 to 8, wherein flufenacet and florasulam are applied pre-planting, pre-emergence and/or post-emergence.

9. The use of a combination of flufenacet and florasulam in the control of plant growth at a locus, **characterized in that** the weight ratio of flufenacet to florasulam is in the range of from 120:1 to 100:1 and flufenacet and florasulam are applied at an application rate of from 80 to 500 g/ha of flufenacet and from 1 to 20 g/ha of florasulam.

## Patentansprüche

1. Zusammensetzung, umfassend eine herbizid wirksame Menge an (A) Flufenacet und (B) Florasulam, **dadurch gekennzeichnet, dass** das Gewichtsverhältnis von Flufenacet zu Florasulam im Bereich von 120:1 bis 100:1 liegt.

2. Zusammensetzung nach Anspruch 1, wobei die Gesamtmenge an Flufenacet und Florasulam 5 bis 99 Gew.-% der Zusammensetzung beträgt; wobei die Zusammensetzung bevorzugt 10 bis 75 Gew.-% Flufenacet und 0,1 bis 5 Gew.-% Florasulam umfasst; wobei die Zusammensetzung bevorzugter 12 bis 65 Gew.-% Flufenacet und 0,2 bis 4 Gew.-% Florasulam umfasst.

3. Zusammensetzung nach einem vorstehenden Anspruch, formuliert als ein wasserlösliches Konzentrat (SL), ein emulgierbares Konzentrat (EC), eine Emulsion (EW), eine Mikroemulsion (ME), ein Suspensionskonzentrat (SC), ein ölbasiertes Suspensionskonzentrat (OD), eine fließfähige Suspension (FS), ein wasserdispergierbares Granulat (WG), ein wasserlösliches Granulat (SG), ein wasserdispergierbares Pulver (WP), ein wasserlösliches Pulver (SP), ein Granulat (GR), ein verkapseltes Granulat (CG), ein Feingranulat (FG), ein Makrogranulat (GG), eine wässrige Suspoemulsion (SE), eine Kapselsuspension (CS) oder ein Mikrogranulat (MG).

4. Verfahren zur Kontrolle des Pflanzenwachstums an einem Standort, umfassend Aufbringen herbizid wirksamer Mengen von Flufenacet und Florasulam an dem Standort, **dadurch gekennzeichnet, dass** das Gewichtsverhältnis von Flufenacet zu Florasulam im Bereich von 120:1 bis 100:1 liegt und Flufenacet und Florasulam mit einer Aufbringungsmenge von 80 bis 500 g/ha Flufenacet und 1 bis 20 g/ha Florasulam aufgebracht werden.

5. Verfahren nach Anspruch 4, wobei das Pflanzenwachstum in einer Kulturpflanze kontrolliert wird, die Getreide, Baumwolle, Kartoffeln, Sonnenblumen, Erdnüsse und/oder Sojabohnen umfasst.

6. Verfahren nach einem der Ansprüche 4 oder 5, wobei Flufenacet und Florasulam gleichzeitig an dem Standort aufgebracht werden und/oder wobei Flufenacet und Florasulam nacheinander an dem Standort aufgebracht werden.

7. Verfahren nach einem der Ansprüche 4 bis 6, wobei das Pflanzenwachstum, das kontrolliert wird, aus einem oder mehreren der folgenden Pflanzen besteht: Borstenhirse (*Setaria spp.*), Wilde Fingerhirse (*Eleusine spp.*), Quecke (*Digitaria spp.*), Weidelgras (*Lolium spp*.), Hirtentäschel (*Capsella bursapastories*)*,* Fetthenne (*Chenopodium album*), Doppeldorn (*Oxygonum sinuatum*), Windenknöterich (*Polygonum convolvulus*), Mexikanische Gewürztagetes (*Tagetes minuta*)*,* Kleinblütiges Knopfkraut (*Galinsoga parviflora*)*,* Weißer Senf (*Raphanus raphanastrium*), Ackerfuchsschwanz (*Alopecurus spp*.), Wiesengras (*Poa spp.*), Windhalm (*Apera spp*.), Hühnerhirse (*Echinochloa spp.*), Kletten-Labkraut (*Galium aparine*), Vogelmiere (Stellaria media), Weg-Rauke (*Sisymbrium officinale*)*,* Ackerfrauenmantel, Echte Kamille (*Matricaria chamomilla*)*,* Geruchlose Kamille (*Matricaria perforate*), Venuskamm, Hirtentäschelkraut, Ausfallraps (*Brassica napus*), Wilder Rettich (*Raphanus raphanistrum*), Ackersenf (*Sinapis arvensis*), Mohn (*Papaver rhoeas*), insbesondere Ackerfuchsschwanz, Wiesengras, Windhalm, Klettenkraut, Vogelmiere, Eintagsfliege, Mohn, Ackersenf und Ausfallraps; wobei es sich bei dem zu kontrollierenden Pflanzenwachstum bevorzugt um eines oder mehrere von Ackerfuchsschwanz, Wiesengras, Windhalm, Kletten-Labkraut, Vogelmiere, Kamille, Mohn, Ackersenf und Raps handelt.

8. Verfahren nach einem der Ansprüche 4 bis 8, wobei Flufenacet und Florasulam vor dem Pflanzen, vor dem Aufsprießen und/oder nach dem Aufsprießen aufgebracht werden.

9. Verwendung einer Kombination aus Flufenacet und Florasulam zur Kontrolle des Pflanzenwachstums an einem Standort, **dadurch gekennzeichnet, dass** das Gewichtsverhältnis von Flufenacet zu Florasulam im Bereich von 120:1 bis 100:1 liegt und Flufenacet und Florasulam mit einer Aufbringungsmenge von 80 bis 500 g/ha Flufenacet und 1 bis 20 g/ha Florasulam aufgebracht werden.

## Revendications

1. Composition comprenant une quantité efficace du point de vue herbicide de (A) flufenacet et de (B) florasulam, **caractérisée en ce que** le rapport pondéral du flufenacet sur le florasulam est dans la plage de 120:1 à 100:1.

2. Composition selon la revendication 1, dans laquelle la quantité totale de flufenacet et de florasulam est de 5 % à 99 % en poids de la composition ; de préférence dans laquelle la composition comprend, en poids, de 10 % à 75 % de flufenacet et de 0,1 % à 5 % de florasulam ; plus préférentiellement dans laquelle la composition comprend, en poids, de 12 % à 65 % de flufenacet et de 0,2 % à 4 % de florasulam.

3. Composition selon une quelconque revendication précédente, étant formulée sous la forme d'un concentré soluble dans l'eau (SL), d'un concentré émulsionnable (EC), d'une émulsion (EW), d'une micro-émulsion (ME), d'un concentré en suspension (SC), d'un concentré en suspension à base d'huile (OD), d'une suspension fluide (FS), d'un granulé hydrodispersible (WG), d'un granulé hydrosoluble (SG), d'une poudre hydrodispersible (WP), d'une poudre hydrosoluble (SP), d'un granulé (GR), d'un granulé encapsulé (CG), d'un granulé fin (FG), d'un macrogranulé (GG), d'une suspo-émulsion aqueuse (SE), d'une suspension de capsule (CS) ou d'un microgranulé (MG).

4. Procédé de régulation de la croissance des plantes sur un site comprenant l'application au site de quantités efficaces du point de vue herbicide de flufenacet et de florasulam, **caractérisé en ce que** le rapport pondéral du flufenacet sur le florasulam est dans la plage de 120:1 à 100:1 et le flufenacet et le florasulam sont appliqués à un taux d'application de 80 à 500 g/ha de flufenacet et de 1 à 20 g/ha de florasulam.

5. Procédé selon la revendication 4, dans lequel la croissance des plantes est régulée dans une culture comprenant des céréales, du coton, des pommes de terre, du tournesol, des arachides et/ou du soja.

6. Procédé selon la revendication 4 ou 5, dans lequel le flufenacet et le florasulam sont appliqués au site en même temps et/ou dans lequel le flufenacet et le florasulam sont appliqués au site consécutivement.

7. Procédé selon l'une quelconque des revendications 4 à 6, dans lequel la croissance des plantes régulée est celle d'un ou plusieurs parmi la sétaire (Setaria spp.), l'éleusine sauvage (Eleusine spp.), le chiendent (Digitaria spp.), l'ivraie (Lolium spp.), la bourse à pasteur (Capsella bursapastories), le chénopode blanc (Chenopodium album), l'aubépine double (Oxygonum sinuatum), la vrillée bâtarde (Polygonum convolvulus), l'œillet d'Inde (Tagetes minuta), le soldat gallant (Galinsoga parviflora), la moutarde blanche (Raphanus raphanastrium), le vulpin (Alopecurus spp.), le pâturin des prés (Poa spp.), l'agrostide stolonifère (Apera spp.), le pied-de-coq (Echinochloa spp.), le gaillet gratteron (Galium aparine), la stellaire moyenne (Stellaria media), l'herbe aux chantres (Sisymbrium officinale), l'alchémille des champs, la camomille des champs (Matricaria chamomilla), la camomille inodore (Matricaria perforate), l'aiguille-du-berger, la bourse-à-pasteur, le colza spontané (Brassica napus), le radis sauvage (Raphanus raphanistrum), la moutarde des champs (Sinapis arvensis), le pavot (Papaver rhoeas), en particulier le vulpin, le pâturin des prés, l'agrostide stolonifère, les gaillets gratterons, la stellaire, les camomilles, le pavot, la moutarde des champs et le colza spontané ; de préférence dans lequel la croissance des plantes régulée est une ou plusieurs parmi le vulpin, le pâturin des prés, l'agrostide stolonifère, le gaillet gratteron, la stellaire, la camomille, le pavot, la moutarde des champs et le colza spontané.

8. Procédé selon l'une quelconque des revendications 4 à 8, dans lequel le flufenacet et le florasulam sont appliqués avant la plantation, avant l'émergence et/ou après l'émergence.

9. Utilisation d'une combinaison de flufenacet et de florasulam dans la régulation de la croissance des plantes sur un site, **caractérisée en ce que** le rapport pondéral du flufenacet sur le florasulam est dans la plage de 120:1 à 100:1 et le flufenacet et le florasulam sont appliqués à un taux d'application de 80 à 500 g/ha de flufenacet et de 1 à 20 g/ha de florasulam.
